# EUROPÄISCHE PATENTSCHRIFT

(11) **EP 1 990 566 B1**
(45) Veröffentlichungstag und Bekanntmachung des Hinweises auf die Patenterteilung: **01.07.2009**
(21) Anmeldenummer: 07009225.9
(22) Anmeldetag: 08.05.2007
(51) Int. Cl.: F16K 24/04, F16K 7/18

(54) **Be- und Entlüftungslement für Rohrleitungen bzw. Armaturen**
Venting and aerating valve for pipes and fittings
Soupape d'aération et de ventilation pour des tuyaux et armatures

(43) Veröffentlichungstag der Anmeldung: 12.11.2008
(73) Patentinhaber: Hawle Armaturen GmbH, 83395 Freilassing (DE)
(72) Erfinder: Götzinger, Stefan, 83404 Ainring (DE); Grassl, Helmut, 83278 Traunstein (DE)
(74) Vertreter: Schwabe - Sandmair - Marx

(56) Entgegenhaltungen:
- EP-A1- 0 568 005
- DE-U1- 29 905 743
- DE-U1- 29 918 722

## Beschreibung

Die Erfindung betrifft ein Be- und Entlüftungsventil für Rohrleitungen bzw. Armaturen. Solche Be- und Entlüftungsventile werden verwendet, um Medium führende Leitungen, insbesondere unter Druck stehende Leitungen und speziell Trinkwasser- oder Abwasserleitungen zu belüften und/oder zu entlüften. Sie können an geodätischen Hochpunkten, an den Leitungen selbst oder an Armaturen im Leitungssystem angeordnet werden.

Be- und Entlüftungsventile mit Sitzdichtungen sind bekannt, zum Beispiel solche, bei denen ein Schwimmkörper selbst an einem Dichtsitz abdichtet. Ferner sind aus der DE 299 05 743 U1 und der DE 299 18 722 U1 Be- und Entlüftungsventile bekannt, die einen Ventilkörper, einen Membranbecher und eine dazwischen angeordnete Rollmembran aufweisen, wobei vorgeschlagen wird, den Ventilkörper nach unten hin kegelstumpfartig verjüngt auszubilden, während der Membranbecher eine zylindrische Innenform hat. Nachteile dieser bekannten Ventile liegen in einer begrenzten Entlüftungsleistung durch den eingeschränkten Durchgangsquerschnitt der radial angeordneten Ventilkörper-Öffnungen, sowie in einer erhöhten Losreißkraft der Rollmembran in der geschlossenen Stellung, was zwangsweise schwerere und somit mit schlechterer Auftriebskraft versehene Schwimmkörper erforderlich macht. Um diese Probleme zu überwinden, müssen die Schwimmkörper vergrößert werden, um die idealen Auftriebs- und Schwerkräfte zu erzielen, was wiederum den Nachteil mit sich bringt, dass die Ventile größer gebaut werden müssen.

Es ist die Aufgabe der vorliegenden Erfindung, ein Be- und Entlüftungsventil bereitzustellen, das zumindest einige der oben genannten Nachteile überwindet. Insbesondere sollen die Entlüftungsfunktion und/oder die Entlüftungskapazität verbessert werden.

Die Erfindung, welche Lösungen für die obigen Probleme bereitstellt, wird durch die beiliegenden Patentansprüche definiert, wobei die Unteransprüche bevorzugte Ausführungsformen beschreiben.

Gemäß einem Aspekt der vorliegenden Erfindung wird ein Be- und Entlüftungsventil für Fluid führende Rohrleitungen bzw. Armaturen bereitgestellt, mit einem im Wesentlichen becherförmigen und nach unten hin querschnittsverkleinernd ausgebildeten Ventilkörper zum Verschließen und Öffnen eines Ventilabgangs, mit einem Membranbecher, welcher einem Schwimmkörper des Ventils zugeordnet ist, und mit einer Rollmembran, die zwischen dem Ventilkörper und dem Membranbecher angeordnet ist und in unterschiedlichen Verschluss- bzw. Öffnungsstellungen über Durchlassöffnungen des Ventilkörpers zu liegen kommen kann. Der Membrankörper weist eine Innenkontur auf, die sich im Wesentlichen entsprechend der Außenkontur des Ventilkörpers nach oben hin aufweitet.

Mit anderen Worten ist auch der Membranbecher, der dem Ventilkörper zugeordnet ist, zumindest in seinem Innenraum über seine axiale Länge querschnittsveränderlich ausgebildet, und zwar so, dass er sich nach unten im Querschnitt verjüngt. Diese Ausgestaltung gibt der Rollmembran ausreichend Platz und verhindert ein Verklemmen in der geschlossenen Stellung, wenn der Membranbecher über dem Ventilkörperunterteil sitzt und die Rollmembran die Durchlassöffnungen abdeckt. Dies hat wiederum zur Folge, dass sich die Rollmembran beim Öffnen leichter ablöst und ein leichterer Schwimmkörper verwendet werden kann. Einerseits bietet ein solcher leichterer Schwimmkörper einen besseren Auftrieb, was ein sichereres und schnelleres Verschließen des Ventils gewährleistet, andererseits kann er kleiner gebaut werden, um die Baugröße des Ventils insgesamt geringer zu halten.

Der Ventilkörper kann im Wesentlichen nach unten hin kegelstumpfförmig ausgebildet sein, und bei einer Ausführungsform der Erfindung gilt dies auch für die Innenkontur des Membranbechers, die demgemäß eine im Wesentlichen kegelige, insbesondere kegelstumpfförmige Form annehmen kann.

Bei einer Ausgestaltungsvariante weist der Membranbecher eine Tiefe und eine Breite auf, die gewährleisten, dass er in der Lage, in welcher er vollständig über dem Ventilkörper sitzt, lediglich mit seinem oberen Rand und über die Rollmembran mit dem Ventilkörper in Kontakt tritt. Mit anderen Worten wird dabei der Membranbecher tiefer und breiter ausgelegt als die Außenform des Ventilkörpers, so dass Verklemmungen der Membran noch sicherer verhindert werden können. Vorteilhaft wirkt es sich auch aus, wenn die Rollmembran an der Außenseite des Membranbechers im Abstand zu dessen Oberkante an diesem befestigt ist, weil die Membranbefestigungsstelle dann nicht mehr direkt durch den Kontakt zwischen Ventilkörper und Membranbecher mit Kräften, zum Beispiel Klemmkräften beaufschlagt wird.

Der Ventilkörper ist bei einer Ausführungsform der Erfindung beweglich an seinem Sitz am Ventilabgang angeordnet und kann so im Bereich des Ventilkörpersitzes einen Durchlass freigeben und schließen.

Mit anderen Worten wird gemäß diesem Aspekt der Erfindung, speziell auch für Be- und Entlüftungsventile kleiner Bauart, ein vom Ventilabgang separierter bzw. separater Ventilkörper zur Verfügung gestellt, und die Tatsache, dass so zwischen dem Ventilkörper und dem Ventilabgang ein Durchlass geschaffen werden kann, ermöglicht die Bereitstellung eines großen Durchlassquerschnittes, wie er bei einer schnelleren Be- und Entlüftung benötigt wird. Wenn diese Option zusammen mit der Bereitstellung einer Rollmembran realisiert wird, kann eine zweifache bzw. zweistufige Öffnung des Ventils stattfinden. In der vollständig geöffneten Stellung wird demnach zusätzlich zu den radial angebrachten Öffnungen am Ventilkörper eine weitere große Öffnung am Sitz des Ventilkörpers freigegeben, und dies bewirkt ein schnelles Entweichen der Luft, was ein zügigeres und druckfreieres Befüllen von Leitungen und Hohlkörpern im System ermöglicht. Die Vorteile des schnellen Luftdurchgangs durch die entsprechende große Öffnung wirken sich natürlich auch beim Befüllen des Ventils mit Luft aus. Das Ventil reagiert sehr schnell auf plötzliche bzw. hohe Unterdrücke im Leitungssystem. Ein solches zweistufiges System kann so ausgelegt werden, dass sich zuerst die große Öffnung zwischen Ventilkörper und Ventilabgang verschließt, wenn das Ventil in die Verschlussstellung übergeht, und danach die stufenlose Einstellung der Entlüftung mit Hilfe der Rollmembran gewährleistet wird.

Der Ventilkörper kann nach unten von seinem Sitz wegfahrbar angeordnet sein, grundsätzlich sind aber auch andere Lösungen denkbar, beispielsweise durch Drehmechanismen oder kombinierte Dreh- und Translationsbewegungen.

Bevorzugt weist der Ventilkörper einen inneren, insbesondere zentrischen Führungsabschnitt auf, mittels dem er in einer Führung am bzw. im Ventilabgang geführt wird. So lässt sich diese Öffnungsstufe gut kontrollieren. Der Ventilkörper kann, speziell im Rahmen seiner weiteren Halterung im Entlüftungsventil, auf einer Schwimmkörper-Führungsstange angeordnet sein, insbesondere auf dem Oberteil der Führungsstange, wo er bevorzugt mittig befestigt ist.

Es besteht die Möglichkeit, die Rollmembran an der unteren Außenfläche des Ventilkörpers zu befestigen und als Zugmittel zu verwenden, welches den Ventilkörper von seinem Sitz wegbewegt, wenn der Schwimmkörper bzw. der Membranbecher, an dem die Rollmembran auf ihrer anderen Seite befestigt ist, sich nach unten bewegt. Dadurch wird die Zweistufigkeit der Öffnung bzw. des Schließens automatisiert.

Das zweistufige bzw. zweifache Verschließen und Öffnen des Ventils wird grundsätzlich mit der Antriebskraft durch den Innendruck im Ventilkörper gesteuert, es besteht aber auch die Möglichkeit, eine Federvorrichtung zwischen den Ventilkörper und den Ventilabgang einzubringen, welche das Verschließen unterstützt, also den Ventilkörper zum Ventilkörpersitz hin vorspannt.

Die Erfindung wird im Weiteren anhand einer Ausführungsform näher erläutert. Sie kann alle hierin beschriebenen Merkmale einzeln sowie in jeder sinnvollen Kombination aufweisen. In den beiliegenden Zeichnungen zeigen:
- Figur 1: eine Schnittdarstellung eines erfindungsgemäßen Be- und Entlüftungsventils im vollständig geschlossen Zustand;
- Figur 2: das Ventil aus Figur 1 im Betriebszustand während der Rollmembran-Entlüftung; und
- Figur 3: das Ventil aus Figur 1 im Zustand der vollständigen Öffnung.

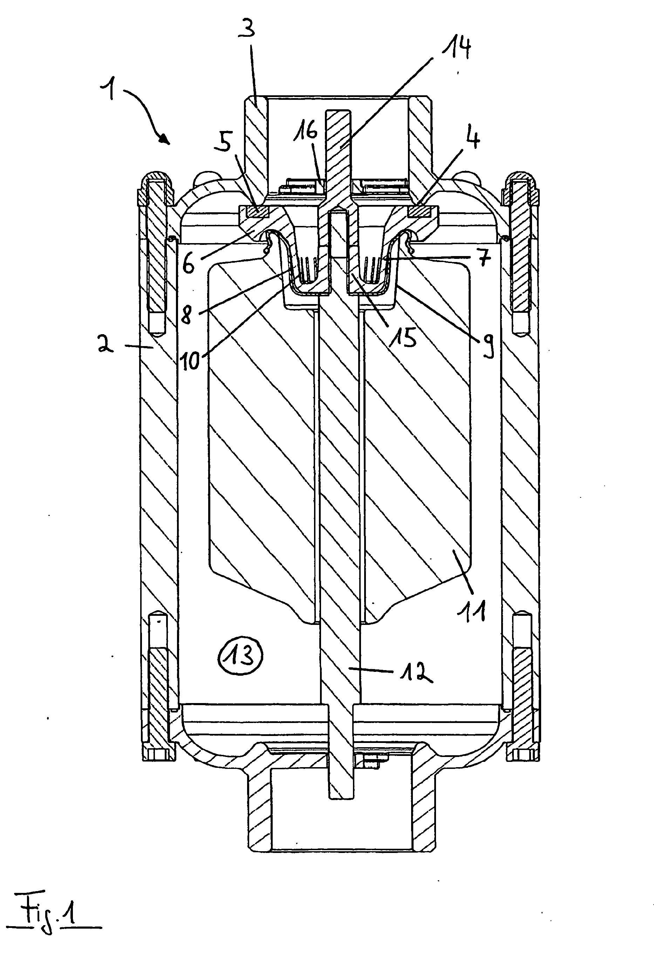

Die Bestandteile des erfindungsgemäßen Be- und Entlüftungsventils sind in der Figur 1 mit Bezugszeichen versehen, und das Ventil selbst trägt insgesamt das Bezugszeichen 1. Es weist ein Ventilgehäuse 2 auf, das oben einen Deckel mit dem wiederum nach oben abstehenden Ventilabgang 3 umfasst. Der Ventilabgang 3 hat an seinem unteren Rand einen nach außen gebogenen Ventilkörpersitz 4, und in der vollständig geschlossenen Stellung der Figur 1 sitzt ein Ventilkörper 6 mit einer Axialdichtung 5 anliegend an dem Ventilkörpersitz 4, so dass zwischen diesen Bauteilen keine Fluidströmung stattfinden kann.

Der Ventilkörper 6 ist im Wesentlichen becherförmig ausgeführt und weist eine sich kegelstumpfförmig nach unten verjüngende Außenkontur 7 auf, in welcher Durchlassöffnungen 10 vorgesehen sind, die hier die Form von am Umfang verteilten Längsschlitzen haben.

In seinem Mittelteil weist der Ventilkörper 6 einen nach oben abstehenden Fortsatz mit einem unteren Teil 15 und einem oberen Teil 14 auf. Der untere Teil 15 ist ein Teil des Ventilkörpers, der obere Abschnitt 14 ist ein separates Teil, und es dient zur Führung des Ventilkörpers in einem Führungslager 16, das innen im Ventilabgang 3 befestigt ist. Auf der anderen Seite ist in die Abschnitte 15 und in den unteren hohlen Teil des Abschnittes 14 der Fortsatz einer Schwimmkörper-Führungsstange 12 eingeschraubt, die wiederum unten im Gehäuse gelagert ist. Zusammen mit der Führungsstange 12 und dem oberen Abschnitt 14 kann sich der Ventilkörper 6 deshalb aus der in Figur 1 gezeigten Stellung nur gerade nach unten und geführt bewegen.

Der auf der Schwimmkörper-Führungsstange 12 ebenfalls nach oben und unten verschieblich gelagerte Schwimmkörper 11 weist in seinem oberen Bereich eine Ausnehmung auf, die mit dem Bezugszeichen 9 bezeichnet ist und den Membranbecher bildet. Der Membranbecher hat einen nach oben vorstehenden Rand, und an der Außenseite dieses Randes ist die Rollmembran 8 befestigt, die sich von dort aus nach unten über die Außenkontur 7 des Ventilkörpers 6 erstreckt und damit die Durchlassöffnungen 10 verschließt.

Der in Figur 1 gezeigte Zustand tritt dann ein, wenn im Innenraum 13 des Gehäuses 2 ein relativ hoher Flüssigkeitsstand vorliegt. Der Schwimmkörper drückt dann einerseits mit seinem oberen Rand die Rollmembran 8 an die untere, bogenförmige Ausnehmung des Ventilkörpers, andererseits wird die Rollmembran durch den Innendruck gegen die Öffnungen 10 gedrückt und verschließt diese. Durch die nach oben ausgeübte Kraft des Schwimmkörpers 11 wird ebenfalls der Spalt zwischen der Dichtung 5 und dem Ventilkörpersitz 4 verschlossen.

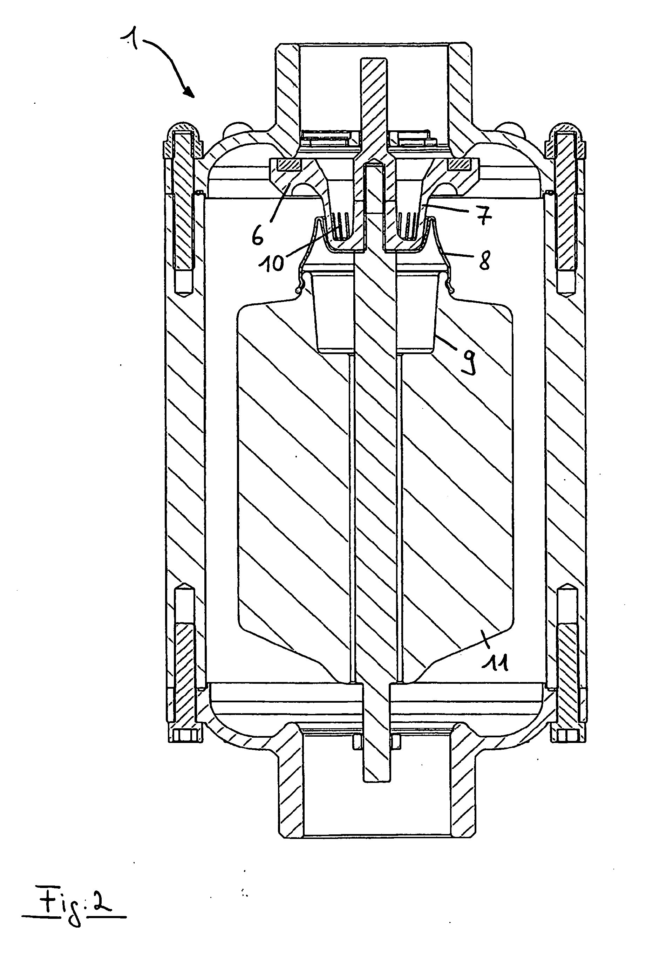

Wenn der Flüssigkeitsstand im Gehäuse sinkt, bewegt sich der Schwimmkörper 11 durch die Schwerkraft nach unten, und das Ventil geht in den Zustand der Figur 2 über. Die Rollmembran 8 wird durch ihre Befestigung außen am Membranbecher 9 nach unten gezogen und rollt sich über der Außenkontur 7 des Ventilkörpers ab, wobei stufenlos und allmählich die Durchlassöffnungen 10 freigegeben werden, so dass ein Luftdurchgang erfolgen kann. Je nach der Luftmenge, die in das Ventil strömt, öffnet sich die Rollmembran 8 mehr oder weniger.

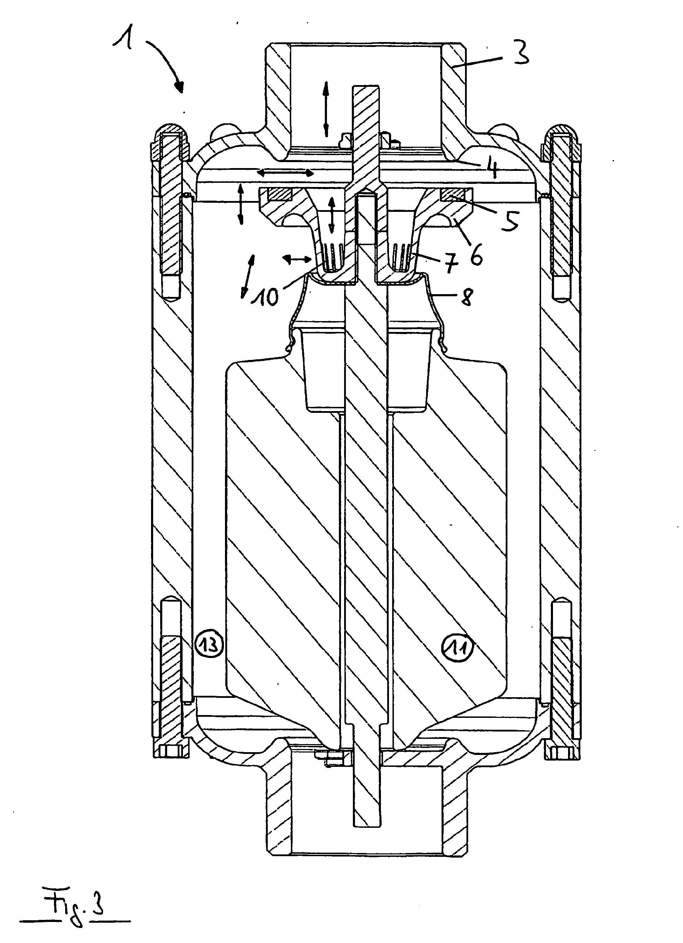

Wenn das Gehäuse weitgehend leer ist, somit das gesamte Gewicht des Schwimmkörpers 11 mit dem Membranbecher 9 zum Tragen kommt und die Gewichtskraft des Schwimmkörpers 11 mit Membranbecher 9 größer ist als die Anpresskraft, die durch den Innendruck erzeugt wird, öffnet sich die zweite Ventilstufe, d.h. der Ventilkörper 6 löst sich vom Ventilkörpersitz 4. Damit wird ein weiterer, großer Entlüftungsquerschnitt frei, und die Luft kann überall dort strömen, wo dies in Figur 3 durch Pfeile angezeigt ist, nämlich durch den Spalt zwischen Ventilkörper 6 und Ventilkörpersitz 4 sowie durch die Durchlassöffnungen 10, die nun nicht mehr durch die Rollmembran 8 abgedeckt sind. Der Ventilkörper 6 bewegt sich geführt (oben im Abgang 3 und unten im Gehäuse) nur nach oben und unten, wie schon angemerkt.

Strömt nun Wasser in das Gehäuseinnere 13, so hebt dies den Schwimmkörper 11 mit dem Membranbecher 9 an, und durch den steigenden Innendruck wird der Ventilkörper 6 nach oben mit seiner Dichtung 5 an den Sitz 4 gedrückt. Während dieses Vorgangs kann eine sehr schnelle Entlüftung durch den Spalt zwischen dem Ventilkörper 6 und dem Ventilkörpersitz 4 erfolgen. Um eine zusätzliche Sicherheit hinsichtlich der Abdichtung im niedrigen Druckbereich zu gewährleisten, kann zwischen den Abgang 3 und den Ventilkörper 6 noch eine Zugfeder eingebaut werden.

Nachdem der Ventilkörper 6 wieder an seinem Sitz 4 Kontakt gemacht und abgedichtet hat, kann die Rollmembran 8 wieder die stufenlose Entlüftung vornehmen, indem sie sich über der Ventilkörper-Außenkontur 7 abrollt und die radial angeordneten Durchlassöffnungen 10 mehr oder weniger frei gibt. Das Ventil wird also ausgehend vom Zustand der Figur 3 bei steigendem Wasser im Gehäuse über einen Zustand gemäß Figur 2 wieder in den Zustand der Figur 1 zurückkehren und zwischen den Zuständen der Figuren 1 und 3 automatisch stufenlos entlüften.

## Patentansprüche

1. Be- und Entlüftungsventil für Fluid führende Rohrleitungen bzw. Armaturen, mit einem im Wesentlichen becherförmigen und nach unten hin querschnittsverkleinernd ausgebildeten Ventilkörper (6) zum Verschließen und Öffnen eines Ventilabgangs (3), mit einem Membranbecher (9), welcher einem Schwimmkörper (11) des Ventils zugeordnet ist, und mit einer Rollmembran (8), die zwischen dem Ventilkörper und dem Membranbecher (9) angeordnet ist und in unterschiedlichen Verschluss- bzw. Öffnungsstellungen über Durchlassöffnungen (10) des Ventilkörpers (6) zu liegen kommen kann, **dadurch gekennzeichnet, dass** der Membranbecher (9) eine Innenkontur aufweist, die sich im Wesentlichen entsprechend der Außenkontur des Ventilkörpers (6) nach oben hin aufweitet.

2. Be- und Entlüftungsventil nach Anspruch 1, **dadurch gekennzeichnet, dass** der Ventilkörper (6) im Wesentlichen kegelstumpfförmig ausgebildet ist.

3. Be- und Entlüftungsventil nach Anspruch 1 oder 2, **dadurch gekennzeichnet, dass** die Innenkontur des Membranbechers (9) im Wesentlichen kegelig, insbesondere kegelstumpfförmig ausgebildet ist.

4. Be- und Entlüftungsventil nach einem der Ansprüche 1 bis 3, **dadurch gekennzeichnet, dass** der Membranbecher (9) eine Tiefe und eine Breite aufweist, die gewährleisten, dass er in der Lage, in welcher er vollständig über dem Ventilkörper (6) sitzt, lediglich mit seinem oberen Rand und über die Rollmembran (8) mit dem Ventilkörper (6) in Kontakt tritt.

5. Be- und Entlüftungsventil nach einem der Ansprüche 1 bis 4, **dadurch gekennzeichnet, dass** die Rollmembran (8) an der Außenseite des Membranbechers (9) im Abstand zu dessen Oberkante an diesem befestigt ist.

6. Be- und Entlüfiunesventil gemäß einem der Ansprüche 1 bis 5, **dadurch gekennzeichnet, dass** der Ventilkörper (6) beweglich an seinem Sitz (4) am Ventilabgang (3) angeordnet ist und so im Bereich des Ventilkörpersitzes (4) einen Durchlass freigeben und schließen kann.

7. Be- und Entlüftungsventil nach Anspruch 6, **dadurch gekennzeichnet, dass** der Ventilkörper (6) nach unten von seinem Sitz (4) wegfahrbar angeordnet ist.

8. Be- und Entlüftungsventil nach Anspruch 6 oder 7, **dadurch gekennzeichnet, dass** der Ventilkörper (6) einen inneren, insbesondere zentrischen Führungsabschnitt (14, 15) aufweist, mittels dem er in einer Führung (16) am bzw. im Ventilabgang geführt wird.

9. Be- und Entlüftungsventil nach einem der Ansprüche 6 bis 8, **dadurch gekennzeichnet, dass** der Ventilkörper (6) auf einer Schwimmkörper-Führungsstange (12) angeordnet ist, insbesondere auf dem Oberteil der Führungsstange (12), mittig befestigt ist.

10. Be- und Entlüftungsventil nach einem der Ansprüche 6 bis 9, **dadurch gekennzeichnet, dass** der Ventilkörper (6) im Bereich seiner Kontaktstelle mit dem Sitz (4) eine Axialdichtung (5) aufweist.

11. Be- und Entlüftungsventil nach einem der Ansprüche 6 bis 10, **dadurch gekennzeichnet, dass** die Rollmembran (8) an der unteren Außenfläche des Ventilkörpers (6) befestigt ist und als Zugmittel dient, welches den Ventilkörper (6) von seinem Sitz (4) weg bewegt, wenn der Schwimmkörper (11) bzw. der Membranbecher (9), an dem die Rollmembran (8) auf ihrer anderen Seite befestigt ist, sich nach unten bewegt.

12. Be- und Entlüftungsventil nach einem der Ansprüche 6 bis 11, **dadurch gekennzeichnet, dass** eine Federeinrichtung zwischen dem Ventilkörper (6) und dem Ventilabgang eingebracht ist, die den Ventilkörper (6) zum Ventilkörpersitz (4) hin vorspannt.

## Claims

1. A ventilating and evacuating valve for fluid-guiding pipe lines and/or fittings, comprising: a substantially cup-shaped valve body (6), formed such that its cross-section is reduced in the downward direction, for closing and opening a valve outlet (3); a diaphragm cup (9) which is assigned to a floating body (11) of the valve; and a roll diaphragm (8) which is arranged between the valve body and the diaphragm cup (9) and can come to rest in different closure and/or opening positions over aperture openings (10) of the valve body (6), **characterised in that** the diaphragm body (9) exhibits an internal contour which expands in the upward direction, substantially in accordance with the external contour of the valve body (6).

2. The ventilating and evacuating valve according to claim 1, **characterised in that** the valve body (6) is formed substantially in the shape of a truncated cone.

3. The ventilating and evacuating valve according to claim 1 or 2, **characterised in that** the internal contour of the diaphragm cup (9) is formed substantially in the shape of a cone, in particular a truncated cone.

4. The ventilating and evacuating valve according to any one of claims 1 to 3, **characterised in that** the diaphragm cup (9) exhibits a depth and width which ensure that in the position in which it is seated completely over the valve body (6), only its upper rim comes into contact with the valve body (6), via the roll diaphragm (8).

5. The ventilating and evacuating valve according to any one of claims 1 to 4, **characterised in that** the roll diaphragm (8) is fastened to the external side of the diaphragm cup (9), at a distance from its upper edge.

6. The ventilating and evacuating valve in accordance with any one of claims 1 to 5, **characterised in that** the valve body (6) is movably arranged on its seat (4) at the valve outlet (3) and can thus expose and close an aperture in the region of the valve body seat (4).

7. The ventilating and evacuating valve according to claim 6, **characterised in that** the valve body (6) is arranged such that it can be moved in the downward direction away from its seat (4).

8. The ventilating and evacuating valve according to claim 6 or 7, **characterised in that** the valve body (6) comprises an internal guiding portion (14, 15), in particular a centric guiding portion (14, 15), by means of which it is guided in a guide (16) on or in the valve outlet.

9. The ventilating and evacuating valve according to any one of claims 6 to 8, **characterised in that** the valve body (6) is arranged on a floating body guiding rod (12), in particular centrally fastened on the upper part of the guiding rod (12).

10. The ventilating and evacuating valve according to any one of claims 6 to 9, **characterised in that** the valve body (6) comprises an axial seal (5) in the region of its point of contact with the seat (4).

11. The ventilating and evacuating valve according to any one of claims 6 to 10, **characterised in that** the roll diaphragm (8) is fastened to the lower external surface of the valve body (6) and serves as a traction means which moves the valve body (6) away from its seat (4) when the floating body (11) and/or diaphragm cup (9), to which the roll diaphragm (8) is fastened on its other side, is moved in the downward direction.

12. The ventilating and evacuating valve according to any one of claims 6 to 11, **characterised in that** a spring device is introduced between the valve body (6) and the valve outlet, which biases the valve body (6) towards the valve body seat (4).

## Revendications

1. Soupape d'aération et de désaération pour conduits tubulaires ou robinets conduisant des fluides,
qui présente un corps de soupape (6) essentiellement en forme de godet dont la section transversale se rétrécit vers le bas et qui ferme et ouvre une sortie de soupape (3),
un godet à membrane (9) étant associé à un flotteur (11) de la soupape et
une membrane déroulante (8) étant disposée entre le corps de soupape et le godet à membrane (9) et étant apte à venir se placer en différentes positions de fermeture et d'ouverture devant des ouvertures de passage (10) ménagées dans le corps de soupape (6),
**caractérisée en ce que**
le contour intérieur du godet à membrane (9) s'évase vers le haut essentiellement en correspondance avec le contour extérieur du corps de soupape (6).

2. Soupape d'aération et de désaération selon la revendication 1, **caractérisée en ce que** le corps de soupape (6) a une forme essentiellement tronconique.

3. Soupape d'aération et de désaération selon les revendications 1 ou 2, **caractérisée en ce que** le contour intérieur du godet à soupape (9) a une configuration essentiellement conique et en particulier tronconique.

4. Soupape d'aération et de désaération selon l'une des revendications 1 à 3, **caractérisée en ce que** le godet à membrane (9) a une profondeur et une largeur qui garantissent que dans la position dans laquelle il repose complètement au-dessus du corps de soupape (6), il n'est en contact avec le corps de soupape (6) que par son bord supérieur et par l'intermédiaire de la membrane déroulante (8).

5. Soupape d'aération et de désaération selon l'une des revendications 1 à 4, **caractérisée en ce que** la membrane déroulante (8) est fixée sur le côté extérieur du godet à membrane (9) à distance du bord supérieur de ce dernier.

6. Soupape d'aération et de désaération selon l'une des revendications 1 à 5, **caractérisée en ce que** le corps de soupape (6) est disposé à déplacement sur son siège (4) situé sur la sortie de soupape (3) et peut ainsi libérer ou fermer un passage situé dans la zone occupée par le siège (4) du corps de soupape.

7. Soupape d'aération et de désaération selon la revendication 6, **caractérisée en ce que** le corps de soupape (6) est disposé de manière à pouvoir s'éloigner de son siège (4) par le bas.

8. Soupape d'aération et de désaération selon les revendications 6 ou 7, **caractérisée en ce que** le corps de soupape (6) présente une partie intérieure et en particulier centrale de guidage (14, 15) par laquelle il est guidé sur un guide (16) prévu sur ou dans la sortie de soupape.

9. Soupape d'aération et de désaération selon l'une des revendications 6 à 8, **caractérisée en ce que** le corps de soupape (6) est disposé sur une tige (12) de guidage du flotteur et est en particulier fixé au milieu de la partie supérieure de la tige de guidage (12).

10. Soupape d'aération et de désaération selon l'une des revendications 6 à 9, **caractérisée en ce que** le corps de soupape (6) présente un joint d'étanchéité axial (5) dans la zone de son emplacement de contact avec le siège (4).

11. Soupape d'aération et de désaération selon l'une des revendications 6 à 10, **caractérisée en ce que** la membrane déroulante (8) est fixée sur la surface extérieure inférieure du corps de soupape (6) et sert de moyen de traction qui éloigne le corps de soupape (6) de son siège (4) lorsque le flotteur (11) ou le godet à membrane (9) sur lequel l'autre côté de la membrane déroulante (8) est fixé se déplace vers le bas.

12. Soupape d'aération et de désaération selon l'une des revendications 6 à 11, **caractérisée en ce qu'**un dispositif à ressort est installé entre le corps de soupape (6) et la sortie de soupape et précontraint le corps de soupape (6) en direction du siège (4) du corps de soupape.
